# EUROPÄISCHE PATENTSCHRIFT

(11) **EP 2 505 296 B1**
(45) Veröffentlichungstag und Bekanntmachung des Hinweises auf die Patenterteilung: **02.03.2016**
(21) Anmeldenummer: 12160111.6
(22) Anmeldetag: 19.03.2012
(51) Int. Cl.: B23K 20/12

(54) **Vorrichtung zum Reibrührschweißen**
Friction stir welding apparatus
Dispositif de soudage par friction-malaxage

(30) Priorität: 01.04.2011 DE 102011015831
(43) Veröffentlichungstag der Anmeldung: 03.10.2012
(73) Patentinhaber: Helmholtz-Zentrum Geesthacht Zentrum für Material- und Küstenforschung GmbH, 21502 Geesthacht (DE)
(72) Erfinder: Hilgert, Jakob, 12169 Berlin (DE); dos Santos, Dr. Jorge F., 21395 Tespe (Avendorf) (DE)
(74) Vertreter: UEXKÜLL & STOLBERG

(56) Entgegenhaltungen:
- EP-B1- 1 738 856
- WO-A1-2006/081819
- WO-A2-2009/056759
- US-A- 5 262 123
- US-A1- 2003 152 466
- US-A1- 2009 255 321
- US-B1- 6 758 382

## Beschreibung

Die vorliegende Erfindung betrifft eine Vorrichtung zum Reibrührschweißen mit einem um eine Drehachse drehend antreibbaren Stift, der ein Antriebsende und ein freies Ende aufweist, wobei zwischen dem Antriebsende und dem freien Ende ein zylindrischer Eingriffsabschnitt vorgesehen ist, der sich axial in Richtung der Drehachse erstreckt und dessen Umfangsfläche zum Eingriff mit einem oder mehreren Werkstücken vorgesehen ist, mit einem ersten Schulterelement, das auf der zum Antriebsende weisenden Seite des Eingriffsabschnitts konzentrisch bezüglich der Drehachse um den Stift angeordnet ist und das eine zum Eingriffsabschnitt weisende sich senkrecht zur Drehachse erstreckende erste Anlagefläche aufweist, und mit einem zweiten Schulterelement, das auf dem zum freien Ende weisenden Seite des Eingriffsabschnitts konzentrisch bezüglich der Drehachse um den Stift angeordnet ist und das eine zum Eingriffsabschnitt weisende sich senkrecht zur Drehachse erstreckende zweite Anlagefläche aufweist, wobei sich die zweite Anlagefläche unmittelbar bis an den Eingriffsabschnitt erstreckt und wobei das erste Schulterelement zur Anlage an die erste Oberfläche und das zweite Schulterelement zur Anlage an die zweite, der ersten gegenüberliegenden Oberfläche eines oder mehrerer Werkstücke vorgesehen ist.

Das Prinzip des Reibschweißens beinhaltet, dass das Material eines oder mehrerer Werkstücke durch Reibung zwischen dem Werkstück und einem weiteren Werkstück oder einem Werkzeug zunächst plastifiziert wird und sich anschließend wieder verfestigt. Beim Reibrührschweißen werden zunächst die zwei zu verbindenden, in der Regel metallischen Werkstücke aneinander angelegt. Das kann beispielsweise heißen, dass zwei Metallplatten oder Bleche Oberfläche an Oberfläche übereinander gelegt werden (Überlappverbindung) oder aber so nebeneinander positioniert werden, dass die schmalen Seitenflächen aneinander anliegen (Stumpfstoß-Verbindung). Danach wird ein Reibrührschweißwerkzeug im Bereich der Kontaktfläche in das Material von mindestens einem der beiden Werkstücke - z.B. über eine Bohrung oder vom Rand her - eingeführt.

Durch eine Rotation des Werkzeuges wird der Reibrührvorgang bewirkt, wobei das Werkzeug an wenigstens einem Werkstück reibt und das Material von mindestens einem der beiden Werkstücke plastifiziert. Dabei kann das Reibrührschweißwerkzeug optional entlang der Grenzfläche der beiden Werkstücke bewegt werden. Das plastifizierte Material an der Grenzfläche der beiden Werkstücke kühlt anschließend ab und bildet die Schweißnaht, welche die beiden Werkstücke zusammenhält.

Aus dem Stand der Technik, wie beispielsweise der WO 2006/055530, sind bereits zahlreiche Vorrichtungen zum Reibrührschweißen bekannt. Allen diesen Vorrichtungen gemeinsam ist ein im Wesentlichen zylinder- oder kegelförmiger Stift mit einem Eingriffsabschnitt zum Eingriff mit mindestens einem Werkstück und mit einem Schulterelement zur Anlage an die Oberfläche des mindestens einen Werkstücks. Stift und Schulterelement werden drehend angetrieben, wobei der Stift z.B. zwischen zwei zu verbindende und aneinander angelegte Werkstücke so weit in die Werkstücke eindringt, bis das Schulterelement an der Oberfläche der Werkstücke anliegt.

Durch die Reibung von Stift und Schulterelement an den Werkstücken wird das Material im angrenzenden Bereich der Werkstücke plastifiziert. Bei einer gleichzeitigen Vorwärtsbewegung der Vorrichtung entlang der Kontaktfläche der beiden Werkstücke wird von dem rotierenden Stift plastifiziertes Material in Bewegungsrichtung des Stifts betrachtet hinter diese transportiert, wo es sich mit weiterem plastifizierten Material der beiden Werkstücke verbindet und eine Schweißnaht bildet.

Die US 2009/0255321 A1 offenbart eine Reibrührschweißvorrichtung mit einem um eine Drehachse drehend angetriebenen Stift, der zwischen einem Antriebsende und einem freien Ende einen Eingriffsabschnitt zum Eingriff mit einem oder mehreren Werkstücken aufweist, mit einem am Antriebsende vorgesehenen ersten Schulterelement und mit einem am freien Ende vorgesehenen zweiten Schulterelement. Das erste Schulterelement und der Stift sind dabei unabhängig voneinander drehend angetrieben. Das zweite Schulterelement ist fest mit dem Stift verbunden bzw. einteilig mit diesem ausgebildet und dreht sich zusammen mit diesem.

Die EP 1 738 856 B1 beschreibt eine Reibrührschweißvorrichtung mit einem um eine Drehachse drehend angetriebenen Stift zum Eingriff mit einem oder mehreren Werkstücken. Ferner weist die Reibrührschweißvorrichtung an einem Antriebsende des Stifts ein erstes Schulterelement und an einem freien Ende des Stifts ein zweites Schulterelement auf, die das oder die Werkstücke von gegenüberliegenden Seiten zusammendrücken. Dabei weist sowohl das erste als auch das zweite Schulterelement mehrere konzentrisch angeordnete Segmente auf, die unabhängig voneinander und unabhängig von dem Stift drehend angetrieben sind.

Aus der WO 2009/056759 A2 ist eine Reibrührschweißvorrichtung bekannt mit einem drehend angetriebenen Stift, der einen Eingriffsabschnitt zum Eingriff mit mindestens einem Werkstück aufweist. An einem Antriebsende des Stifts ist ferner ein erstes Schulterelement vorgesehen, das längs der Drehachse verschieblich und um die Drehachse frei drehbar an dem Stift gehaltert ist. An einem dem Antriebsende gegenüberliegenden freien Ende des Stifts ist ein zweites Schulterelement vorgesehen, das fest mit dem Stift verbunden ist und mit diesem mitdreht.

Die WO 2006/081819 A1 offenbart eine Reibrührschweißvorrichtung mit einem drehend um eine Drehachse angetriebenen Stift zum Eingriff mit mindestens einem Werkstück, an dessen Antriebsende ein erstes Schulterelement und an dessen freiem Ende ein zweites Schulterelement angebracht ist. Erstes und zweites Schulterelement sind fest mit dem Stift zur Drehung mit diesem verbunden.

Um das Reibrührschweißwerkzeug an beiden Oberflächen abstützen zu können und die Werkstücke zueinander auszurichten bzw. aneinander zu drücken, kann eine Vorrichtung zum Reibrührschweißen mit einem ersten und einem zweiten Schulterelement - ein sogenanntes Bobbin-Werkzeug - verwendet werden, wobei das erste und das zweite Schulterelement an gegenüberliegenden Oberflächen des oder der Werkstücke anliegen. Eine derartige Vorrichtung ist beispielsweise aus der JP 2008/296285 oder aus der EP 1 738 856 B1 bekannt.

Problematisch bei der Vorrichtung zum Reibrührschweißen in Bobbin-Konfiguration ist jedoch, dass der Stift, um ein Drehmoment auf beide Schulterelemente zu übertragen und gleichzeitig an dem zu plastifizierenden Bereich des mindestens einen Werkstücks zu reiben, sehr hohe mechanische und thermische Lasten aufnehmen muss. Um die Vorrichtung nicht zu zerstören, wird die erreichbare Geschwindigkeit bei der Vorwärtsbewegung des Stiftes durch das Werkstück somit begrenzt, wodurch sich auch die Prozessdauer des gesamten Schweißprozesses verlängert. Die aus mechanischen Gesichtspunkten notwendige begrenzte Geschwindigkeit bei der Vorwärtsbewegung des Stiftes führt jedoch zu überhöhten Prozesstemperaturen im plastifizierten Bereich des Werkstücks und im Bereich des Stiftes, die sich einerseits negativ auf die Qualität der Schweißverbindung auswirken und andererseits den Stift selbst beschädigen können.

Außerdem liegen die Prozessgeschwindigkeiten bei Einsatz eines Bobbin-Werkzeugs deutlich unter den Prozessgeschwindigkeiten von konventionellen Reibrührschweißwerkzeugen. Aus diesen Gründen kommt dem Reibrührschweißprozess unter Einsatz von Bobbin-Werkzeugen bislang nur eine untergeordnete Bedeutung zu.

Ausgehend vom Stand der Technik ist es daher die Aufgabe der vorliegenden Erfindung, eine Vorrichtung zum Reibrührschweißen bereitzustellen, mit der die mechanische und thermische Belastung des Stiftes sowie die thermische Belastung der Werkstücke reduziert werden.

Diese Aufgabe wird dadurch gelöst, dass das zweite Schulterelement mit dem Stift frei um die Drehachse drehbar verbunden ist. Auf diese Weise überträgt der Stift kein Drehmoment auf das zweite Schulterelement, sondern dreht sich frei relativ zu diesem. Das zweite Schulterelement führt folglich keine Drehbewegung gegenüber der Oberfläche des mindestens einen Werkstücks aus, weswegen auch keine aus der Drehbewegung resultierende Reibung auftritt, die wiederum für eine zusätzliche Erwärmung des zweiten Schulterelements und des mindestens einen Werkstücks verantwortlich wäre. Da sich die zweite Anlagefläche unmittelbar bis an den Eingriffsabschnitt des Stifts erstreckt, ist es lediglich der Eingriffsabschnitt, der bei dessen Rotation Reibungswärme erzeugt. Das zweite Schulterelement trägt nicht dazu bei. Das zweite Schulterelement weist ferner ein zweites, in der zweiten Anlagefläche vorgesehenes ringförmiges Zwischenstück aus Keramikmaterial auf, wobei das zweite Zwischenstück den Eingriffsabschnitt umgibt.

Mechanische und thermische Belastung des Stiftes werden somit reduziert. Auch die thermische Belastung des Werkstücks bzw. der Werkstücke wird reduziert. Eine niedrigere maximale Werkstücktemperatur wiederum schlägt sich in einer höheren Qualität der Schweißverbindung nieder. Außerdem kann bei niedrigerer thermischer und mechanischer Belastung des Stiftes eine höhere Schweißgeschwindigkeit eingestellt werden, d.h. der Stift kann mit höherer Geschwindigkeit vorwärts durch das Material bewegt werden. Auf diese Weise kann zum einen die Temperatur von Stift und Werkstück nochmals verringert werden. Zum anderen werden so eine kürzere Prozessdauer und damit ein effizienterer Schweißprozess möglich.

Zusammenfassend lässt sich feststellen, dass mit dem erfindungsgemäßen gegenüber dem zweiten Schulterelement frei drehenden Stift einer Beschädigung des Stiftes entgegengewirkt wird, eine höhere Qualität der Schweißverbindung erzielt wird und ein schnellerer, effizienterer Schweißprozess ermöglicht wird.

In einer bevorzugten Ausführungsform ist der Stift axial verstellbar mit dem zweiten Schulterelement verbunden. Auf diese Weise kann der Abstand des zweiten Schulterelements zu dem ersten Schulterelement und somit die Größe des Eingriffsabschnitts verändert werden, wodurch die Vorrichtung an verschiedene Werkstückabmessungen angepasst werden kann. Außerdem kann mit einem axial verstellbaren zweiten Schulterelement, das z.B. eine Vorspannkraft erfährt, Druck auf das Werkstück bzw. die Werkstücke ausgeübt werden, um eine bessere Abstützwirkung zu erzielen.

In einer erfindungsgemäßen Ausführungsform weist das zweite Schulterelement ein zweites, in der zweiten Anlagefläche vorgesehenes ringförmiges Zwischenstück aus Keramikmaterial auf, wobei das zweite Zwischenstück den Eingriffsabschnitt umgibt. Das zweite Zwischenstück ist konzentrisch bezüglich der Drehachse um den Stift herum, d.h. zwischen dem Eingriffsabschnitt des Stifts und dem zweiten Schulterelement angeordnet.

Zunächst dient das zweite ringförmige Zwischenstück zur thermischen Entkopplung von Stift und zweitem Schulterelement, wobei ein direkter Kontakt zwischen Stift und zweitem Schulterelement verhindert wird. Dieser Effekt wird durch die Verwendung von einem keramischen Material verstärkt, das eine sehr geringe Wärmeleitfähigkeit aufweist.

Ein solches Zwischenstück dient darüber hinaus als Gleitlager für den Stift in dem zweiten Schulterelement bzw. als Gleitlager für das zweite Schulterelement an dem Stift. Der keramische Werkstoff des zweiten Zwischenstücks ist ebenso hochtemperaturbeständig wie hochfest und kann deshalb die hohen Temperaturen des Stiftes wie auch die hohen Lagerkräfte und Momente des Stiftes aufnehmen, ohne beschädigt zu werden. Ferner können Keramikgleitlager mit einer ausreichend glatten Oberfläche gefertigt werden, um eine reibungsarme Lagerung des Stiftes sowohl in Bezug auf eine Drehung des Stiftes als auch in Bezug auf eine axiale Relativbewegung zwischen Stift und zweitem Schulterelement zu ermöglichen.

In noch einer weiteren bevorzugten Ausführungsform ist das zweite Schulterelement als Hülse mit einer sich radial zur Drehachse erstreckenden Bodenfläche und einer zylindrischen, sich parallel zu Drehachse erstreckender Seitenwandung ausgebildet, wobei in der Bodenfläche die zweite Anlagefläche ausgebildet ist. Dabei ist es besonders bevorzugt, wenn das freie Ende des Stifts von einem zylindrischen Träger umgeben ist, der in axialer Richtung des Stifts verstellbar ist, und wenn die Hülse drehbar an dem Träger gelagert ist. Diese drehbare Lagerung kann beispielsweise über Wälzlager erfolgen. Besonders bevorzugt ist es ferner, wenn das freie Ende des Stifts mit einem Gewinde versehen ist, wobei der Träger auf das freie Ende aufgeschraubt ist. Auf diese Weise kann die Position des Trägers und damit des gesamten zweiten Schulterelements an dem freien Ende des Stifts in einfacher Weise eingestellt werden oder dieses ganz von dem Stift entfernt werden.

Mit einem solchen Aufbau des zweiten Schulterelements wird daher erreicht, dass der Stift frei drehbar um die Drehachse mit dem zweiten Schulterelement verbunden ist, wobei gleichzeitig die axiale Position des zweiten Schulterelements angepasst werden kann.

Zwischen der Seitenwandung und dem freien Ende des Stifts ist in einer bevorzugten Ausführungsform ein Kugellager vorgesehen. Vorzugsweise können auch zwei Kugellager vorgesehen sein, die parallel und in Richtung der Drehachse beabstandet angeordnet sind. Die Verwendung von Kugellagern bietet eine im Wesentlichen reibungsfreie Lagerung, die auch axiale Lasten aufnehmen kann.

In einer anderen bevorzugten Ausführungsform weist der Träger eine sich senkrecht zur Drehachse erstreckende Gewindebohrung zur Aufnahme einer Fixierschraube auf, wobei in der Seitenwandung der Hülse eine koaxial zu der Gewindebohrung ausgerichtete Bohrung vorgesehen ist. Durch eine solche Fixierschraube, die z.B. von außerhalb der Hülse zugänglich ist, kann der aufgeschraubte Träger dann in einer Position bezüglich der Drehachse an dem freien Ende des Stiftes fixiert werden bzw. nach dem Lösen der Schraube von dem Stift entfernt werden.

Der Stift ist in noch einer anderen bevorzugten Ausführungsform fest mit dem ersten Schulterelement verbunden. Dabei ist es besonders bevorzugt, wenn der Stift einstückig mit dem ersten Schulterelement ausgebildet ist. Auf diese Weise rotiert die erste Schulter mit dem Stift mit und reibt an der Oberfläche des mindestens einen Werkstücks, wobei das Material des Werkstücks im an das erste Schulterelement angrenzenden Bereich plastifiziert wird.

In einer dazu alternativen, bevorzugten Ausführungsform ist der Stift frei um die Drehachse drehbar mit dem ersten Schulterelement verbunden. Dabei ist es besonders bevorzugt, wenn das erste Schulterelement ein erstes ringförmiges Zwischenstück aus Keramikmaterial aufweist und das erste Zwischenstück den Eingriffsabschnitt umgibt. Besonders bevorzugt ist es ferner, wenn der Stift axial verschiebbar mit dem ersten Schulterelement verbunden ist. Damit weist das erste Schulterelement in den wesentlichen Punkten den gleichen Aufbau wie das zweite Schulterelement auf. Mit zwei frei um die Drehachse drehbar mit dem Stift verbundenen Schulterstücken kann die thermische und mechanische Belastung des Stifts wie in Verbindung mit dem zweiten Schulterelement beschrieben noch weiter reduziert werden ebenso wie die Qualität der Schweißverbindung weiter gesteigert werden.

Die vorliegende Erfindung wird im Folgenden anhand einer ein Ausführungsbeispiel darstellenden Zeichnung erläutert. Die Zeichnung zeigt in
- Fig. 1: eine Seitenansicht eines Ausführungsbeispiels einer erfindungsgemäßen Vorrichtung zum Reibrührschweißen und
- Fig. 2: einen Schnitt entlang der Drehachse des Ausführungsbeispiels aus Fig. 1.

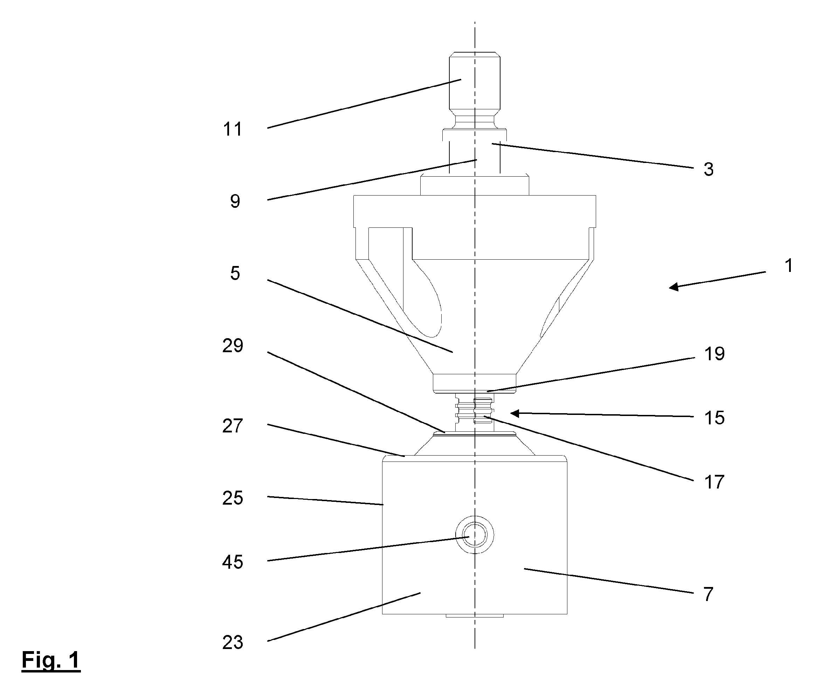

In Figur 1 ist ein Ausführungsbeispiel einer erfindungsgemäßen Vorrichtung 1 zum Reibrührschweißen dargestellt. Die Vorrichtung 1 zum Reibrührschweißen weist einen Stift 3, ein erstes Schulterelement 5 und ein zweites Schulterelement 7 auf.

Der Stift 3 hat eine im Wesentlichen zylindrische Form und wird bezüglich einer Drehachse 9, die mit der Symmetrieachse des Stiftes 3 zusammenfällt, drehend angetrieben. Der Stift 3 weist ein Antriebsende 11 und ein dem Antriebsende 11 gegenüberliegendes freies Ende 13 auf. Am Antriebsende 11 erfolgt der drehende Antrieb des Stiftes 3 über einen nicht dargestellten Motor. Zwischen dem Antriebsende 11 und dem freien Ende 13 weist der Stift 3 einen zylindrischen Eingriffsabschnitt 15 auf, der vorgesehen ist, um drehend mit mindestens einem Werkstück einzugreifen. Der Eingriffsabschnitt 15 weist in dem vorliegenden Ausführungsbeispiel entlang seines Umfangs mit einer axialen Ausdehnung eine strukturierte Umfangsfläche 17 auf, um bei dem Eingriff mit dem Material eines bzw. mehrerer Werkstücke eine höhere Reibung zu erzeugen. Wie in Fig. 1 erkennbar, weist der Eingriffsabschnitt 15 an seiner Umfangsfläche 17 eine gerillte Struktur auf.

Das erste, auf der zum Antriebsende 11 weisenden Seite des Eingriffsabschnitts 15 angeordnete Schulterelement 5 hat in dem vorliegenden Ausführungsbeispiel eine im Wesentlichen kegelförmige Gestalt und ist konzentrisch bezüglich der Drehachse 9 um den Stift 3 angeordnet, wobei der Kegel sich in Richtung des zweiten Schulterelements 7 zuspitzt. Ferner weist das erste Schulterelement 5 eine erste Anlagefläche 19 auf, die senkrecht zur Drehachse 9 angeordnet ist und zum Eingriffsabschnitt 15 hin gerichtet ist. Das erste Schulterelement 5 ist in dem vorliegenden Ausführungsbeispiel drehbar mit dem Stift 3 verbunden. Die im Wesentlichen kegelförmige Gestalt des ersten Schulterelements 5 erweist sich als vorteilhaft, um die bei der Reibung während einer linearen Bewegung der ersten Anlagefläche 19 an einem Werkstück entstehende Wärme möglichst gut aufnehmen und von der ersten Anlagefläche 19 wegleiten zu können.

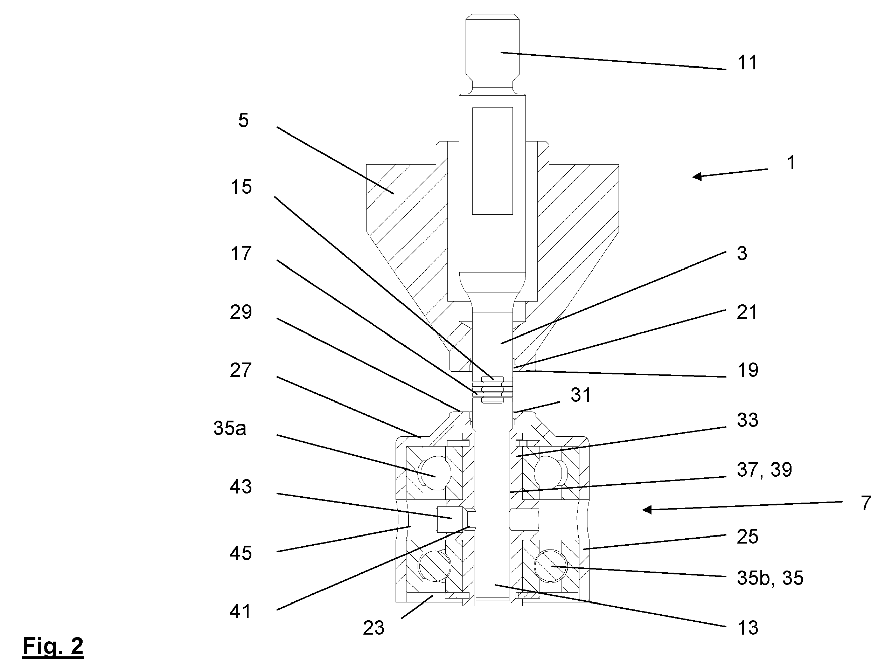

Zwischen der ersten Anlagefläche 19 und dem Eingriffsabschnitt 15 des Stifts 3 weist das erste Schulterelement 5 ein erstes ringförmiges Zwischenstück 21 aus Keramikmaterial auf (siehe Figur 2). Das erste ringförmige Zwischenstück 21 dient zur thermischen Entkopplung von Stift 3 und erstem Schulterelement 5, wobei ein direkter Kontakt zwischen dem Stift 3 und dem ersten Schulterelement 5 im Bereich der ersten Anlagefläche 19 durch das erste Zwischenstück 21 unterbrochen wird. Das erste ringförmige Zwischenstück 21 ist vorzugsweise aus keramischem Material gefertigt, das eine geringe Wärmeleitfähigkeit aufweist. Außerdem ist keramisches Material hoch temperaturbeständig und wird somit auch durch die bei dem Betrieb der Vorrichtung auftretenden hohen Temperaturen nicht zerstört.

Das zweite, auf dem zum freien Ende 13 weisenden Seite des Eingriffsabschnitts 15 angeordnete Schulterelement 7 umfasst in dem vorliegenden Ausführungsbeispiel eine zylinderförmige Hülse 23, die konzentrisch bezüglich der Drehachse 9 um den Stift 3 angeordnet ist, mit einer zylindrischen, sich parallel zur Drehachse 9 erstreckenden Seitenwandung 25 und einer sich radial zur Drehachse 9 ersteckenden Bodenfläche 27, die eine zweite, zum Eingriffsabschnitt 15 weisende und sich senkrecht zur Drehachse 9 erstreckende Anlagefläche 29 aufweist. Die zweite Anlagefläche 29 erstreckt sich unmittelbar bis an den Eingriffsabschnitt 15, sodass kein Zwischenraum verbleibt und auch kein weiteres Element zwischen Eingriffsabschnitt 15 und zweiter Anlagefläche 29 vorgesehen ist. Außerdem liegt die zweite Anlagefläche 29 gegenüber und im Wesentlichen parallel zu der ersten Anlagefläche 19, wobei beide Anlageflächen 19, 29 den Eingriffsabschnitt 15 in axialer Richtung begrenzen und dessen axiale Ausdehnung an verschiedene Werkstückdicken anpassen können. Beide Anlageflächen 19, 29 sind konzentrisch bezüglich der Drehachse 9 um den Stift 3 bzw. um die Enden des Eingriffsabschnitts 15 angeordnet und weisen zueinander, sodass die Schulterelemente 5, 7 zur Anlage an einander gegenüberliegende Oberflächen eines oder mehrerer Werkstücke vorgesehen sind.

Das zweite Schulterelement 7 weist ähnlich wie das erste Schulterelement 5 in der zweiten Anlagefläche 29 ein zweites ringförmiges Zwischenstück 31 auf. Das zweite Zwischenstück 31 dient hierbei nicht nur als thermisches Entkopplungselement zwischen Stift 3 und zweitem Schulterelement 7 bzw. zweiter Anlagefläche 29, sondern auch als keramisches Gleitlager für den gegenüber dem zweiten Schulterelement 7 rotierenden Stift 3. Keramische Gleitlager weisen eine hohe Festigkeit und gleichzeitig eine hohe Temperaturbeständigkeit auf, was Voraussetzung für ein Lager ist, das bei der vorliegenden Erfindung eingesetzt werden kann.

Wie aus Fig. 2 ersichtlich, umfasst das zweite Schulterelement 7 ferner einen im Wesentlichen zylindrischen Träger 33, der das freie Ende 13 des Stiftes 3 konzentrisch bezüglich der Drehachse 9 umgibt und der über Kugellager 35 frei drehbar mit der Seitenwandung 25 der Hülse 23 verbunden ist. In dem vorliegenden Ausführungsbeispiel sind zur drehenden Lagerung des zweiten Schulterelements 7 an dem Stift 3 zwei Kugellager 35a, 35b vorgesehen, die in axialer Richtung voneinander beabstandet, im Wesentlichen parallel zueinander und senkrecht zur Drehachse 9 in der Hülse 23 zwischen der Seitenwandung 25 und dem Träger 33 angeordnet sind. Der Träger 33 weist auf seiner zum Stift 3 gerichteten inneren Oberfläche ein Innengewinde 37 auf, und der Stift 3 weist an seinem freien Ende 13 ein entsprechendes Außengewinde 39 auf, so dass der Träger 33 auf das freie Ende 13 des Stifts 3 aufgeschraubt werden kann. Dadurch ist der Stift 3 axial verstellbar mit dem zweiten Schulterelement 7 verbunden.

Der Träger 33 weist ferner eine sich senkrecht zur Drehachse 9 erstreckende Gewindebohrung 41 auf, die vorgesehen ist, um eine Fixierschraube 43 aufzunehmen, die in eingeschraubter Position an den Stift 3 anschlagen und mit diesem eingreifen kann. Das Eingreifen der Fixierschraube 43 mit dem Stift 3 dient dazu, die axiale Position des Trägers 33 in Bezug auf den Stift 3 und somit auch die axiale Ausdehnung des Eingriffsabschnitts 15 bzw. den Abstand zwischen der ersten und der zweiten Anlagefläche 19, 29 einzustellen. Um die Fixierschraube 43 für eine Einstellung zugänglich zu machen, ist in der Seitenwandung 25 koaxial zu der Gewindebohrung 41 eine Bohrung 45 vorgesehen.

Die Vorrichtung 1 zum Reibrührschweißen funktioniert wie folgt. Zunächst werden zwei zu verbindende Werkstücke an denjenigen Flächen, die eine Verbindung eingehen sollen, aneinander angelegt (nicht dargestellt). Daraufhin wird die zuvor beschriebene Vorrichtung 1 zum Reibrührschweißen mit dem Eingriffsabschnitt 15 entlang dieser zu verbindenden Flächen bewegt, wobei sich der Stift 3 relativ zu dem ersten Schulterelement 5 eine Drehung ausführt und wobei die erste und die zweite Anlagefläche 19, 29 an den Oberflächen des Werkstücks bzw. der Werkstücke anliegen.

Aneinander angelegt heißt hier, dass entweder zwei im Wesentlichen flache Werkstücke, z.B. Platten oder Bleche, entlang ihrer Stirnseiten, d.h. in der Regel der schmaleren Seiten, aneinander gelegt werden und an diesen Flächen verbunden werden (Stumpfstoß-Verbindung). In diesem Fall verläuft die Drehachse 9 des Stifts 3 während des Schweißvorgangs parallel zur Ebene, die durch die aneinanderliegenden Flächen definiert ist.

Es kann aber auch heißen, dass die zwei Werkstücke überlappen, d.h. Teile der Oberflächen übereinander gelegt und dann die jeweils angrenzenden Flächen verbunden werden (ÜberlappVerbindung). Hier verläuft die Drehachse 9 während des Schweißens dann senkrecht zu Anlageebene. Die Vorrichtung 1 kann dann entlang der gesamten Kontaktfläche von einem Ende der aneinander angelegten Werkstücke zum anderen bewegt werden oder gezielt an einzelnen Orten eingebracht werden. Der Stift 3 kann vom Rand her in die Werkstücke eingebracht werden oder eine Bohrung kann in den Bereich der Kontaktfläche der Werkstücke eingebracht werden, wonach das zweite Schulterelement 7 von dem Stift 3 abgeschraubt wird und der Stift 3 durch die Bohrung geführt wird. Danach wird das zweite Schulterelement wieder auf den Stift 3 aufgeschraubt und mit der Fixierschraube 43 so fixiert, dass beide Anlageflächen 19, 29 an den jeweiligen gegenüberliegenden bzw. voneinander wegweisenden Oberflächen der Werkstücke oder des Werkstücks anliegen.

Durch die zuvor beschriebene frei drehbare Lagerung des zweiten Schulterelements 7 an dem freien Ende 13 des Stifts 3 wird das zweite Schulterelement 7 und damit die zweite Anlagefläche 29 durch die Drehung des Stifts 3 nicht mitbewegt. Die zweite Anlagefläche 29 reibt also auch nicht an dem Werkstück bzw. den Werkstücken. Auf diese Weise wird die thermische Belastung des Stifts 3 und des zweiten Schulterelements 7 gegenüber einem Reibrührschweißwerkzeug nach dem Stand der Technik mit zwei rotierenden Schultern reduziert. Im gleichen Zug wird die mechanische Belastung des Stifts 3 vermindert, da der Stift 3 kein Drehmoment auf das zweite Schulterelement 7 übertragen muss.

Mit einem solchen Aufbau sind als Folge der zuvor genannten Merkmale höhere Geschwindigkeiten möglich, mit denen sich die Vorrichtung 1 bzw. der rotierende Stift 3 entlang der zu verbindenden Flächen bewegt. Durch die höhere Geschwindigkeit der Vorrichtung 1 wird abermals die thermische Belastung auf Stift 3, zweites Schulterelement 7 und Werkstück verringert, da der Stift 3 kürzere Zeit an einem Ort rotiert, d.h. kürzere Zeit an dem selben Material reibt. Gleichzeitig wird die thermische Belastung des Werkstücks bzw. der Werkstücke reduziert, wodurch eine höhere Qualität der Schweißverbindung erreicht wird.

Alternativ kann auch das erste Schulterelement 5 fest an dem Stift 3 gelagert werden. Damit würde dann zwar die thermische und mechanische Belastung von Stift 3, erstem Schulterelement 5 und Werkstück aus oben genannten Gründen vergrößert, aber der Aufbau im oberen Teil der Vorrichtung würde sich vereinfachen.

## Patentansprüche

1. Vorrichtung (1) zum Reibrührschweißen
mit einem um eine Drehachse (9) drehend antreibbaren Stift (3), der ein Antriebsende (11) und ein freies Ende (13) aufweist,
wobei zwischen dem Antriebsende (11) und dem freien Ende (13) ein zylindrischer Eingriffsabschnitt (15) vorgesehen ist, der sich axial in Richtung der Drehachse (9) erstreckt und dessen Umfangsfläche (17) zum Eingriff mit einem oder mehreren Werkstücken vorgesehen ist,
mit einem ersten Schulterelement (5), das auf der zum Antriebsende (11) weisenden Seite des Eingriffsabschnitts (15) konzentrisch bezüglich der Drehachse (9) um den Stift (3) angeordnet ist und das eine zum Eingriffsabschnitt (15) weisende sich senkrecht zur Drehachse (9) erstreckende erste Anlagefläche (19) aufweist, und
mit einem zweiten Schulterelement (7), das auf der zum freien Ende (13) weisenden Seite des Eingriffsabschnitts (15) konzentrisch bezüglich der Drehachse (9) um den Stift (3) angeordnet ist und das eine zum Eingriffsabschnitt (15) weisende sich senkrecht zur Drehachse (9) erstreckende zweite Anlagefläche (29) aufweist,
wobei sich die zweite Anlagefläche (29) unmittelbar bis an den Eingriffsabschnitt (15) erstreckt und
wobei das erste Schulterelement (5) zur Anlage an die erste Oberfläche und das zweite Schulterelement (7) zur Anlage an die zweite, der ersten gegenüberliegenden Oberfläche eines oder mehrerer Werkstücke vorgesehen ist,
**dadurch gekennzeichnet,**
**dass** das zweite Schulterelement (7) mit dem Stift (3) frei um die Drehachse (9) drehbar verbunden ist, so dass das zweite Schulterelement (7) keine Drehbewegung gegenüber der Oberfläche des mindestens einen Werkstücks ausführt,
**dass** das zweite Schulterelement (7) ein zweites, in der zweiten Anlagefläche (29) vorgesehenes ringförmiges Zwischenstück (31) aus Keramikmaterial aufweist und
**dass** das zweite Zwischenstück (31) den Eingriffsabschnitt (15) umgibt.

2. Vorrichtung nach Anspruch 1, **dadurch gekennzeichnet, dass** der Stift (3) axial verstellbar mit dem zweiten Schulterelement (7) verbunden ist.

3. Vorrichtung nach einem der Ansprüche 1 bis 2, **dadurch gekennzeichnet, dass** das zweite Schulterelement (7) als Hülse (23) mit einer sich radial zur Drehachse (9) erstreckenden Bodenfläche (27) und einer zylindrischen, sich parallel zu Drehachse (9) erstreckender Seitenwandung (25) ausgebildet ist und
dass in der Bodenfläche (27) die zweite Anlagefläche (29) ausgebildet ist.

4. Vorrichtung nach Anspruch 3, **dadurch gekennzeichnet, dass** das freie Ende (13) des Stifts (3) von einem zylindrischen Träger (33) umgeben ist, der in axialer Richtung des Stifts (3) verstellbar ist, und
dass die Hülse (23) drehbar an dem Träger (33) gelagert ist.

5. Vorrichtung nach Anspruch 4, **dadurch gekennzeichnet, dass** das freie Ende (13) des Stifts (3) mit einem Gewinde (39) versehen ist und
dass der Träger (33) auf das freie Ende (13) aufgeschraubt ist.

6. Vorrichtung nach einem der Ansprüche 3 bis 5, **dadurch gekennzeichnet, dass** zwischen der Seitenwandung (25) und dem freien Ende (13) des Stifts (3) ein Kugellager (35) vorgesehen ist.

7. Vorrichtung nach einem der Ansprüche 4 bis 6, **dadurch gekennzeichnet, dass** der Träger (33) eine sich senkrecht zur Drehachse (9) erstreckende Gewindebohrung (41) zur Aufnahme einer Fixierschraube (43) aufweist und
dass in der Seitenwandung (25) der Hülse (23) eine koaxial zu der Gewindebohrung (41) ausgerichtete Bohrung (45) vorgesehen ist.

8. Vorrichtung nach einem der Ansprüche 1 bis 7, **dadurch gekennzeichnet, dass** der Stift (3) fest mit dem ersten Schulterelement (5) verbunden ist.

9. Vorrichtung nach Anspruch 8, **dadurch gekennzeichnet, dass** der Stift (3) einstückig mit dem ersten Schulterelement (5) ausgebildet ist.

10. Vorrichtung nach einem der Ansprüche 1 bis 7, **dadurch gekennzeichnet, dass** der Stift (3) frei um die Drehachse (9) drehbar mit dem ersten Schulterelement (5) verbunden ist.

11. Vorrichtung nach Anspruch 10, **dadurch gekennzeichnet, dass** das erste Schulterelement (5) ein erstes ringförmiges Zwischenstück (21) aus Keramikmaterial aufweist und
dass das erste Zwischenstück (21) den Eingriffsabschnitt (15) umgibt.

12. Vorrichtung nach Anspruch 10 oder 11, **dadurch gekennzeichnet, dass** der Stift (3) axial verschiebbar mit dem ersten Schulterelement (5) verbunden ist.

## Claims

1. An apparatus (1) for friction stir welding comprising:
a pin (3) configured to be driven in a rotating manner about an axis of rotation (9) including a drive end (11) and a free end (13),
wherein between the drive end (11) and the free end (13) a cylindrical engaging portion (15) is provided extending axially in the direction of the axis of rotation (9) and having a circumferential surface (17) configured for engagement with one or more workpieces,
a first shoulder element (5) arranged on the side of the engaging portion (15) facing the drive end (11) and which is arranged concentrically around the pin (3) with respect to the axis of rotation (9), and including a first bearing surface (19) facing the engaging portion (15) and extending perpendicularly to the axis of rotation (9), and
a second shoulder element (7) arranged on the side of the engaging portion (15) facing the free end (13) and which is arranged concentrically around the pin (3) with respect to the axis of rotation (9), and including a second bearing surface (29) facing the engaging portion (15) and extending perpendicularly to the axis of rotation (9),
wherein the second bearing surface (29) extends directly to the engaging portion (15) and
wherein the first shoulder element (5) is configured to rest against the first surface and the second shoulder element (7) is configured to rest against the second surface of the one or more workpieces, opposite the first surface,
**characterized in that,**
the second shoulder element (7) is connected to the pin (3) so as to be freely rotatable about the axis of rotation (9), so that the second shoulder element (7) cannot perform a rotation with respect to the surface of the at least one workpiece,
the second shoulder element (7) comprises a second annular intermediate piece (31) of ceramic material provided in the second bearing surface (29) and
the second intermediate piece (31) surrounds the engaging portion (15).

2. The apparatus as claimed in claim 1, **characterized in that** the pin (3) is connected to the second shoulder element (7) in an axially adjustable manner.

3. The apparatus as claimed in claims 1 to 2, **characterized in that** the second shoulder element (7) is formed as a sleeve (23) with a bottom surface (27) extending radially to the axis of rotation (9), and a cylindrical side wall (25) extending parallel to the axis of rotation (9), and
the second bearing surface (29) is formed in the bottom surface (27).

4. The apparatus as claimed in claim 3, **characterized in that** the free end (13) of the pin (3) is surrounded by a cylindrical carrier (33) which is adjustable in the axial direction of the pin (3), and
the sleeve (23) is mounted rotatably on the carrier (33).

5. The apparatus as claimed in claim 4, **characterized in that** the free end (13) of the pin (3) is provided with a thread (39) and
the carrier (33) is screwed onto the free end (13).

6. The apparatus as claimed in claims 3 to 5, **characterized in that** a ball bearing (35) is provided between the side wall (25) and the free end (13) of the pin (3).

7. The apparatus as claimed in claims 4 to 6, **characterized in that** the carrier (33) has a threaded bore (41) extending perpendicularly to the axis of rotation (9) for receiving a fixing screw (43), and
a bore (45) aligned coaxially in relation to the threaded bore (41) is formed in the side wall (25) of the sleeve (23).

8. The apparatus as claimed in claims 1 to 7, **characterized in that** the pin (3) is fixedly connected to the first shoulder element (5).

9. The apparatus as claimed in claim 8, **characterized in that** the pin (3) is formed in one piece with the first shoulder element (5).

10. The apparatus as claimed in claims 1 to 7, **characterized in that** the pin (3) is connected to the first shoulder element (5) so as to be freely rotatable about the axis of rotation (9).

11. The apparatus as claimed in claim 10, **characterized in that** the first shoulder element (5) comprises a first annular intermediate piece (21) of ceramic material and
the first intermediate piece (21) surrounds the engaging portion (15).

12. The apparatus as claimed in claim 10 or 11, **characterized in that** the pin (3) is connected to the first shoulder element (5) in an axially moveable manner.

## Revendications

1. Dispositif (1) de soudage par friction-malaxage comprenant un pion (3) qui peut être entraîné en rotation autour d'un axe de rotation (9) et qui comporte une extrémité d'entraînement (11) et une extrémité libre (13), entre l'extrémité d'entraînement (11) et l'extrémité libre (13) étant prévue une portion de prise cylindrique (15) qui s'étend axialement dans le sens de l'axe de rotation (9) et dont la surface périphérique (17) est prévue pour venir en prise avec une ou plusieurs pièces ouvrées, comprenant un premier élément d'épaulement (5) qui est disposé autour du pion (3), concentriquement à l'axe de rotation (9), sur le côté de la portion de prise tourné vers l'extrémité d'entraînement (11) et qui comporte une première surface d'appui (19), laquelle est tournée vers la portion de prise (15) et s'étend perpendiculairement à l'axe de rotation (9), et comprenant un second élément d'épaulement (7) qui est disposé autour du pion (3), concentriquement à l'axe de rotation (9), sur le côté de la portion de prise (15) tourné vers l'extrémité libre (13) et qui comporte une seconde surface d'appui (29), laquelle est tournée vers la portion de prise (15) et s'étend perpendiculairement à l'axe de rotation (19), la seconde surface d'appui (29) s'étendant directement jusqu'à la portion de prise (15) et le premier élément d'épaulement (5) étant prévu pour prendre appui sur la première surface et le second élément d'épaulement (7) étant prévu pour prendre appui sur la seconde surface, en vis-à-vis de la première, d'une ou plusieurs pièces ouvrées, **caractérisé en ce que** le second élément d'épaulement (7) est relié au pion (3) en libre rotation autour de l'axe de rotation (9), de sorte que le second élément d'épaulement (7) n'effectue aucun mouvement de rotation par rapport à la surface de la au moins une pièce ouvrée, **en ce que** le second élément d'épaulement (7) comporte une seconde pièce intermédiaire annulaire (31) en matériau céramique prévu dans la seconde surface d'appui (29), et **en ce que** la seconde pièce intermédiaire (31) entoure la portion de prise (15).

2. Dispositif selon la revendication 1, **caractérisé en ce que** le pion (3) est relié de manière axialement mobile au second élément d'épaulement (7).

3. Dispositif selon une des revendications 1 à 2, **caractérisé en ce que** le second élément d'épaulement (7) est conformé en douille (23) avec une surface de fond (27) s'étendant radialement à l'axe de rotation (9) et avec une paroi latérale cylindrique (25) s'étendant parallèlement à l'axe de rotation (9), et **en ce que** dans la surface de fond (27) est ménagée la seconde surface d'appui (29).

4. Dispositif selon la revendication 3, **caractérisé en ce que** l'extrémité libre (13) du pion (3) est entourée d'un support cylindrique (33) qui est mobile dans la direction axiale du pion (3), et **en ce que** la douille (23) est montée à rotation sur le support (33).

5. Dispositif selon la revendication 4, **caractérisé en ce que** l'extrémité libre (13) du pion (3) est munie d'un filetage (39), et **en ce que** le support (33) est vissé sur l'extrémité libre (13).

6. Dispositif selon une des revendications 3 à 5, **caractérisé en ce qu'**entre la paroi latérale (25) et l'extrémité libre (13) du pion (3) est prévu un roulement à billes (35).

7. Dispositif selon une des revendications 4 à 6, **caractérisé en ce que** le support (33) comporte un trou taraudé (41) s'étendant perpendiculairement à l'axe de rotation (9) pour recevoir une vis de blocage (43), et **en ce que** dans la paroi latérale (25) de la douille (23) est prévu un trou (45) orienté coaxialement au trou taraudé (41).

8. Dispositif selon une des revendications 1 à 7, **caractérisé en ce que** le pion (3) est solidarisé au premier élément d'épaulement (5).

9. Dispositif selon la revendication 8, **caractérisé en ce que** le pion (3) est conçu d'une seule pièce avec le premier élément d'épaulement (5).

10. Dispositif selon une des revendications 1 à 7, **caractérisé en ce que** le pion (3) est relié au premier élément d'épaulement (5) en libre rotation autour de l'axe de rotation (9).

11. Dispositif selon la revendication 10, **caractérisé en ce que** le premier élément d'épaulement (5) comporte une première pièce intermédiaire annulaire (21) en matériau céramique, et **en ce que** la première pièce intermédiaire (21) entoure la portion de prise (15).

12. Dispositif selon la revendication 10 ou 11, **caractérisé en ce que** le pion (3) est relié de manière axialement mobile au premier élément d'épaulement (5).
